# EUROPEAN PATENT SPECIFICATION

(11) **EP 1 474 984 B1**
(45) Date of publication and mention of the grant of the patent: **05.04.2006**
(21) Application number: 04251029.7
(22) Date of filing: 25.02.2004
(51) Int. Cl.: A21B 7/00, A47J 36/02

(54) **Baking tray for bread maker and associated bread makers**
Backblech für Brotbackmaschine und Brotbackmaschine mit demselben
Bac de cuisson pour machine de fabrication automatique de pain et machine avec un tel bac

(30) Priority: 07.05.2003 KR 2003029086
(43) Date of publication of application: 10.11.2004
(73) Proprietor: SAMSUNG ELECTRONICS CO., LTD., Suwon-city, Gyeonggi-do (KR)
(72) Inventor: Sung, Han-jun, Suwon-city Kyungki-do (KR); Kwon, Yong-hyun, Suwon-city Kyungki-do (KR); Kim, Chul, Anyang-city Kyungki-do (KR); Lee, Tae-uk, Suwon-city Kyungki-do (KR); Park, Jae-ryong, Paldal-ku Suwon-city Kyungki-do (KR); Lee, Jang-woo, Suwon-city Kyungki-do (KR); Lim, Dong-bin, Suwon-city Kyungki-do (KR)
(74) Representative: Brandon, Paul Laurence

(56) References cited:
- WO-A-92/10100
- WO-A-99/25467
- DE-A- 2 401 085
- DE-A- 3 142 312
- US-A1- 2003 022 027

## Description

The present invention relates to baking trays for bread makers, and more particularly, though not exclusively to baking trays for bread makers formed with a non-sticky ceramic layer.

Conventionally, various bread makers have been developed to allow a user to easily make bread by automatically performing multiple steps such as kneading, leavening and baking of raw materials to provide finished bread to the user.

Typically, a bread maker in which dough is kneaded by reciprocating a mixing bag up and down includes: an oven compartment; a pair of parallel kneading drums which are rotatably disposed in upper and lower parts of the oven compartment and rotated in clockwise and counterclockwise directions; a baking tray which is placed between the upper and lower kneading drums and formed with a slit; a pair of dough-blocking members which is disposed in an upper part of the oven compartment between the baking tray and the upper kneading drum and prevents the mixing bag from being moved toward the upper kneading drum; a heater to heat the inside of the oven compartment; a rotation sensor sensing rotations of the upper and lower kneading drums; a driving part rotating the upper and lower kneading drums; and a control part controlling a rotation of the upper and lower kneading drums. WO-A-99/25467 discloses a bread maker of this type.

A baking process of the bread maker is described as follows. Upper and lower ends of the mixing bag which contains raw materials for bread are wound by the pair of kneading drums and then the mixing bag is reciprocated for a predetermined period of time by rotation of the upper and lower kneading drums, so that dough is kneaded in the mixing bag.

Thereafter, only the lower kneading drum is rotated, and the kneaded dough in the mixing bag moves into the baking tray. Then, the heater heats the inside of the oven compartment, thereby making bread in the baking tray by leavening and baking the kneaded raw materials for a predetermined period of time.

When bread making is completed, the bread should be smoothly separated from the baking tray. However, the separation is not easy, because the bread sticks inside of the baking tray. Therefore, it is required that inner surfaces of the baking tray be coated so that the finished bread can be easily separated from the baking tray. However, in the above-described bread maker, the dough in the mixing bag is kneaded by rotating the upper and lower kneading drums and the mixing bag repeatedly strikes the baking tray during a kneading process by being reciprocated up and down. Thus, if a coating layer has bad abrasion resistance, it may be damaged and removed by the repeated strikes, thereby rising a sanitary problem. Further, a repetitive usage of the baking tray makes the coating layer sticky and requires a forced separation of the bread and the baking tray, so that the shape of the finished bread may be deformed. Hence, a baking tray whose inner surfaces are coated with non-sticky material having good abrasion resistance is required.

Here, the term "non-sticky" has the meaning that the bread does not stick to the baking tray and can be easily separated therefrom.

US-A-2003/0022027 discloses a cook surface having a stick resistant coating of a ceramic nitride material thereon. However, the coating is applied by a PVD (physical vapour deposition) method which requires fine polishing of the metal substrate to be coated in order to provide the required superior stick resistant properties.

Accordingly, it is an aim of the present invention to provide a baking tray for bread maker formed with a non-sticky ceramic layer inside thereof.

The present invention according to independent claim 1 provides a baking tray for use in a bread maker, the baking tray having surfaces coated with a non-sticky ceramic layer, characterized in that the non-sticky layer is formed by a sol-gel method or an electro deposition method.

Suitably, the non-sticky ceramic layer is coated on an inner surface of the baking tray.

The present invention according to independent claim 3 provides a bread maker comprising a baking tray according to the invention.

Further features of the present invention are set out in the appended claims.

The present invention will become apparent and more readily appreciated from the following description of the preferred embodiments, by way of example only, taken in conjunction with the accompanying drawings of which:
FIG. 1 is a perspective view illustrating a bread maker to which a baking tray according to the present invention is applied.

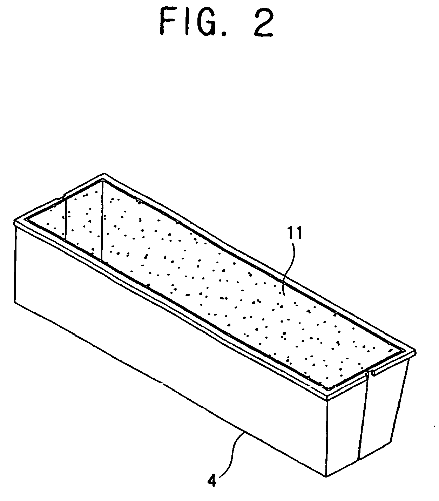

FIG. 2 is an enlarged perspective view of the baking tray of FIG. 1;

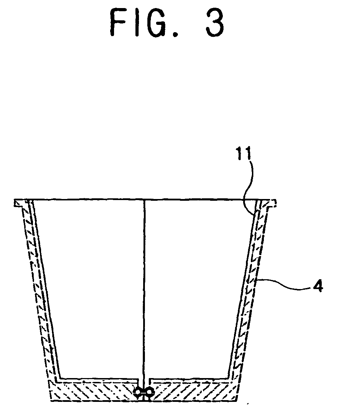

FIG. 3 is a sectional view of the baking tray formed with a non-sticky ceramic layer according to the present invention.

Reference will now be made in detail to the present preferred embodiments of the present invention, examples of which are illustrated in the accompanying drawings, wherein like reference numerals refer to the like elements throughout. The embodiments are described below in order to explain the present invention by referring to the figures.

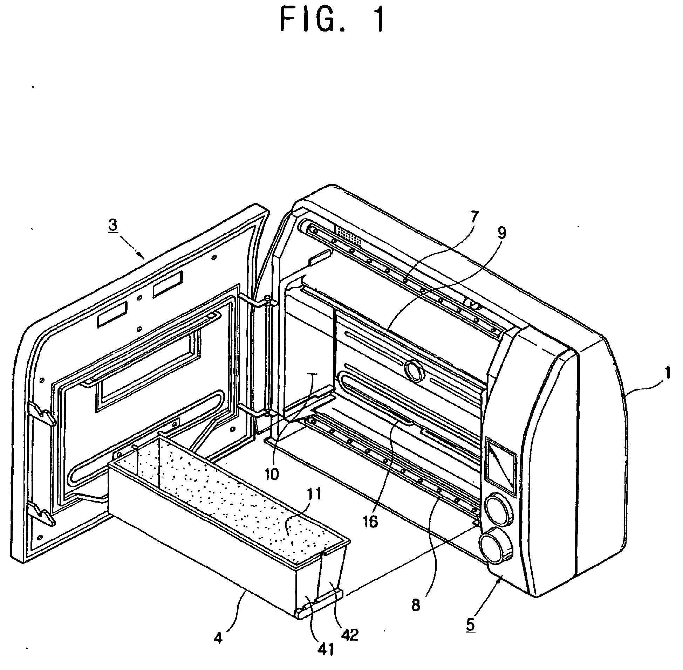

FIG. 1 is a perspective view of a bread maker provided with a baking tray 4 according to an embodiment of the present invention. As shown in FIG. 1, the bread maker comprises: a main body 1 provided with an oven compartment 10; a door 3 to rotatably open and close a front opening of the oven compartment 10; and an operation display panel 5 in a front side of the main body 1 to display an operation state of the main body 1.

Upper and lower kneading drums 7 and 8, which are disposed in parallel to wind upper and lower ends of a mixing bag (not shown) filled with raw materials to make bread in clockwise and counterclockwise directions, are placed in upper and lower parts inside of the oven compartment 10. Between the upper and lower kneading drums 7 and 8 is placed a pair of dough-blocking members 9 preventing the raw materials kneaded in the mixing bag from being moved toward the upper kneading drum 7.

In a lower part of the oven compartment 10, a baking tray 4 which slides out of the oven compartment 10 and contains the kneaded materials for bread therein is provided between the upper and lower kneading drums 7 and 8.

The baking tray 4 has a box shape having a top opening by combining first and second tray members 41 and 42 of an approximately "L" shaped section symmetrical to each other. A slit is formed at the bottom of the baking tray 4 by the first and second tray members 41 and 42. A non-sticky ceramic layer 11 is coated inside of the baking tray 4.

The ceramic layer 11 is made by a sol-gel method. Generally, the sol-gel method is performed as follows. At first, a colloidal solution, i.e., sol, is formed. The sol is made of solid particles of a diameter of few hundred of nm suspended in liquid state. Then, the particles condense in a new phase, i.e., gel in which a solid macromolecule is immersed in a liquid phase. The gel which is obtained in the above-described process is changed into an inorganic reticular structure. Thereafter, a drying process and a heat-treatment process are followed, which transforms the gel into the ceramic.

Now, the method of coating a surface of the baking tray 4 with the non-sticky ceramic layer 11 will be described. At first, impurities on the surface of the baking tray 4 on which the non-sticky ceramic layer 11 is to be coated are removed by a sanding-process or an etching-process. Then, the surface of the baking tray 4 is cleaned with a predetermined cleaner. Coating material desired to coat the surface is preheated at about 70°C and then applied on the surface of the baking tray 4 by a well-known spray method. Thereafter, a sintering process at about 70°C is followed for about 30 minutes, so that the non-sticky ceramic layer 11 is formed on the surface of the baking tray 4.

In the sintering process, time for sintering is varied according to a setting temperature. Generally, at the temperature of 90°C, it takes about 60 minutes for sintering and at the temperature of 180°C, it takes about 20 minutes for sintering.

With this configuration, one end of the mixing bag is wound by the upper kneading drum 7. Then, the other end of the mixing bag passes through the pair of dough-blocking members 9 and the slit formed at the bottom of the baking tray 4 and then is wound by the lower kneading drum 8. The mixing bag filled with raw materials to make bread is reciprocated up and down by the upper and lower kneading drums 7 and 8 during a kneading process, so that the raw materials to make bread are kneaded between the pair of dough-blocking members 9 and the baking tray 4. The drums 7, 8 are driven by a drum driving part (not shown). A control part (not shown) controls rotation of the drums 7, 8 using a rotation sensor (not shown). Thereafter, the mixing bag is removed and the raw materials to make bread contained in the baking tray 4 are baked by the baking heater 16.

Here, when the mixing bag filled with raw materials to make bread is moved down, it strikes the baking tray 4 forcefully and gives an impact on the lower surface of the baking tray 4. However, this impact can be absorbed by the non-sticky ceramic layer 11 having good abrasion resistance.

In the above-described embodiment, the ceramic layer is formed by the sol-gel method. However, an electro deposition coating may be applied.

As described above, according to preferred embodiments of the present invention, the baking tray in which impact given by the mixing bag moved up and down can be absorbed and which is more sanitary is offered.

Although a few embodiments of the present invention have been shown and described, it would be appreciated by those skilled in the art that changes may be made in this embodiment without departing from the principles and spirit of the invention, the scope of which is defined in the claims.

## Claims

1. A baking tray (4) to be used in a bread maker, **characterized in that** the baking tray (4) has surfaces coated with a non-sticky ceramic layer (11), the non-sticky layer being formed by a sol-gel method or an electro deposition method.

2. The baking tray (4) according to claim 1, wherein the non-sticky ceramic layer (11) is coated on an inner surface of the baking tray.

3. A bread maker in which dough is kneaded by reciprocating a mixing bag up and down, comprising:
an oven compartment (10);
a pair of parallel kneading drums (7, 8) which are rotatably disposed in upper and lower parts of the oven compartment (10) and rotated in clockwise and counterclockwise directions;
a baking tray (4), having a ceramic layer (11) to receive the dough to bake bread, wherein the baking tray (4) is placed between the upper and lower kneading drums (7, 8) and formed with a slit;
a pair of dough-blocking members (9) which is disposed in an upper part of the oven compartment (10) between the baking tray ,(4) and the upper kneading drum (7) and prevents the raw materials kneaded in the mixing bag from being moved toward the upper kneading drum (7) ;
a heater (16) to heat the inside of the oven compartment (10);
a rotation sensor sensing rotations of the upper and lower kneading drums (7, 8);
a driving part rotating the upper and lower kneading drums (7, 8);
a control part controlling a rotation of the upper and lower kneading drums (7, 8); and
**characterized in that** ceramic layer is formed by a sol-gel method or an electro deposition method.

4. The bread maker according to claim 3, further comprising:
a door (3) to rotatably open and close a front opening of the oven compartment (10); and
an operation display panel (5) in a front side of the main body (1) to display an operation state of a main body.

5. The bread maker according to claim 3 or claim 4, wherein the upper and lower kneading drums (7, 8) are disposed in parallel to wind upper and lower ends of the mixing bag.

6. The bread maker according to any one of claims 3-5, wherein the baking tray (4) slides into and out of the oven compartment (10).

7. The bread maker according to any one of claims 3-6, wherein the baking tray (4) is shaped like a box, and includes an opening in the top surface.

## Patentansprüche

1. Backform (4), die in einer Brotbackmaschine zu verwenden ist, **dadurch gekennzeichnet, dass** die Backform (4) Oberflächen hat, die mit einer keramischen Antihaftschicht (11) beschichtet sind, wobei die Antihaftschicht durch ein Sol-Gel-Verfahren oder ein elektrochemisches Abscheideverfahren ausgebildet wird.

2. Backform (4) nach Anspruch 1, wobei die keramische Antihaftschicht (11) auf eine innenfläche der Backform aufgetragen ist.

3. Brotbackmaschine, in der Teig geknetet wird, indem ein Mischbeutel auf und ab bewegt wird, und die umfasst;
ein Ofenfach (10);
ein Paar paralleler Knetwalzen (7, 8), die drehbar in einem oberen und einem unteren Teil des Ofenfachs (10) angeordnet sind und im Uhrzeigersinn sowie entgegen dem Uhrzeigersinn gedreht werden ;
eine Backform (4), die eine keramische Schicht (11) und den Teig zum Brotbacken aufnimmt, wobei die Backform (4) zwischen der oberen und der unteren Knetwalze (7. 8) angeordnet und mit einem Schlitz versehen ist;
ein Paar Teig-Sperrelemente (9), die in einem oberen Teil des Ofenfachs (10) zwischen der Backform (4) und der oberen Knetwalze (7) angeordnet sind und verhidem, dass in dem Mischbeutel geknetete Rohmaterialien auf die obere Knetwalze (7) zu bewegt werden;
eine Heizeinrichtung (16), die den Innenraum des Ofenfachs (10) heizt;
einen Drehungssensor, der Drehungen der oberen und der unteren Knetwalze (7, 8) erfasst;
einen Antriebsteil, der die obere und die untere Knetwalze (7,8) dreht;
einen Steuerteil, der eine Drehung der oberen und der unteren Knetwalze (7, 8) steuert; und
**dadurch gekennzeichnet, dass** die keramische Schicht durch ein Sol-Gel-Verfahren oder ein elektrochemisches Abscheideverfahren ausgebildet wird.

4. Brotbackmaschine nach Anspruch 3, die des Weiteren umfasst:
eine Tor (3), die eine vordere Öffnung des Ofenfachs (10) drehend öffnet und schließt; und
ein Funktionsanzelgefeld (5) an einer Vorderseite des Hauptkörpers (1), das einen Funktionszustand eines Hauptkörpers anzeigt.

5. Brotbackmaschine nach Anspruch 3 oder Anspruch 4, wobei die obere und die untere Knetwalze (7, 8) parallel angeordnet sind, um ein oberes und ein unteres Ende des Mischbeutels aufzuwickeln.

6. Brotbackmaschine nach einem der Ansprüche 3 - 5, wobei die Backform (4) in das Ofenfach (10) hinein und aus ihm heraus gleitet.

7. Brotbackmaschine nach einem der Ansprüche 3-6, wobei die Backform (4) wie ein Kasten geformt ist und eine Öffnung an der Oberseite enthält.

## Revendications

1. Plateau de cuisson (4) destiné à être utilisé dans une machine à pain, **caractérisé en ce que** le plateau de cuisson (4) a des surfaces revêtues d'une couche céramique non adhésive (11), la couche non adhésive étant formée par un procédé sol-gel ou par un procédé de dépôt électrolytique.

2. Plateau de cuisson (4) selon la revendication 1, dans lequel la couche céramique non adhésive (11) est déposée sur une surface intérieure du plateau de cuisson.

3. Machine à pain dans laquelle de la pâte est pétrie en donnant à un sac de pétrissage un mouvement de va-et-vient vers le haut et vers le bas, comportant :
un compartiment de four (10),
une paire de tambours de pétrissage parallèles (7, 8) qui sont disposés de façon à pouvoir tourner dans des parties supérieure et inférieure du compartiment de four (10) et qui sont mis en rotation dans le sens des aiguilles d'une montre et dans le sens inverse des aiguilles d'une montre,
un plateau de cuisson (4), ayant une couche céramique (11) pour recevoir la pâte pour cuire du pain, dans lequel le plateau de cuisson (4) est placé entre les tambours de pétrissage supérieur et Inférieur (7,8) et est formé en ayant une fente,
une paire d'éléments de blocage de pâte (9) qui est disposée dans une partie supérieure du compartiment de four (10) entre le plateau de cuisson (4) et le tambour de pétrissage supérieur (7) et qui empêche les matières brutes pétries dans le sac de pétrissage d'être déplacées vers le tambour de pétrissage supérieur (7).
un dispositif de chauffage (16) pour chauffer l'intérieur du compartiment de four (10),
un capteur de rotation détectant des stations des tambours de pétrissage supérieur et inférieur (7,8),
une partie d'entraînement faisant tourner les tambours de pétrissage supérieur et inférieur (7, 8),
une partie de commande commandant une rotation des tambours de pétrissage supérieur et inférieur (7, 8), et
**caractérisée en ce que** la couche céramique est formée par un procédé sol-gel ou par un procédé de dépôt électrolytique.

4. Machine à pain selon la revendication 3, comportant également :
une porte (3) pour ouvrir et fermer de maniete rotative une ouverture avant du compartiment de four (10), et
un panneau d'affichage de fonctionnement (5) dans un côté avant du corps principal (1) pour afficher un état de fonctionnement d'un corps principal.

5. Machine à pain selon la revendication 3 ou la revendication 4, dans laquelle les tambours de pétrissage supérieur et inférieur (7, 8) sont disposés parallèlement pour enrouler des extrémités supérieure et inférieure du sac de pétrissage.

6. Machine à pain selon l'une quelconque des revendications 3 à 5, dans laquelle le plateau de cuisson (4) coulisse dans le compartiment de four (10) et à l'exterieur de celui-ci.

7. Machine à pain selon l'une quelconque des revendications 3 à 6, dans laquelle le plateau de cuisson (4) est formé comme une boîte, et comporte une ouverture dans la surface supérieure.
